# EUROPEAN PATENT SPECIFICATION

(11) **EP 3 112 897 B1**
(45) Date of publication and mention of the grant of the patent: **22.09.2021**
(21) Application number: 15866484.7
(22) Date of filing: 11.08.2015
(51) Int. Cl.: G01S 15/93, A47L 11/00

(54) **INTELLIGENT ROBOT, AND SENSOR ASSEMBLY AND OBSTACLE DETECTION METHOD FOR SAME**
INTELLIGENTER ROBOTER UND SENSORANORDNUNG SOWIE HINDERNISERKENNUNGSVERFAHREN DAFÜR
ROBOT INTELLIGENT, ET ENSEMBLE CAPTEUR ET PROCÉDÉ DE DÉTECTION D'OBSTACLES POUR UN TEL ROBOT

(30) Priority: 12.12.2014 CN 201410766395; 23.03.2015 CN 201510127843
(43) Date of publication of application: 04.01.2017
(73) Proprietor: Jiangsu Midea Cleaning Appliances Co., Ltd., Xiangcheng Economic Development Zone Suzhou, Jiangsu 215100 (CN)
(72) Inventor: YU, Qinghao, Suzhou Jiangsu 215100 (CN); SHEN, Luokun, Suzhou Jiangsu 215100 (CN); SHEN, Qiang, Suzhou, Jiangsu 215100 (CN)
(74) Representative: RGTH
(86) International application number: PCT/CN2015/086691
(87) International publication number: WO 2016/090940

(56) References cited:
- EP-A1- 2 672 287
- WO-A1-03/062937
- WO-A1-03/062937
- CN-A- 101 916 110
- CN-A- 103 479 307
- CN-U- 202 445 997
- GB-A- 2 353 095
- US-A- 5 621 291
- US-B1- 6 493 612

## Description

### FIELD

The present disclosure relates to electrical equipment technology field, and more particularly to a sensor assembly for an intelligent robot, an obstacle detection method for an intelligent robot and an intelligent robot.

### BACKGROUND

With a development of the intelligent robot technology, more and more intelligent robots enter into households, and greatly improve comfortability and convenience of human life. An intelligent cleaner is one kind of home intelligent robot. When choosing and buying an intelligent cleaner, the product intelligence should be considered, and if the product can satisfy the intelligence demands of the users to the most, more consumers may be attracted, and profits will be created for enterprises.

At present, when the home intelligent robot is used to detect an obstacle, not all the regions may be covered or a lot of dead zones may exist because of the influence of colors. Therefore, in the dead zones, it is easy for the intelligent robots to act wrong movements or have collisions.

Document GB 2353095 A discloses an autonomous vacuum cleaner has a plurality of sensors for detecting obstacles in the vicinity of the vehicle.

### SUMMAY

The present disclosure seeks to solve at least one of the problems existing in the related art to at least some extent.

Therefore, an objective of the present disclosure is to provide a sensor assembly for an intelligent robot, which is used for obstacle detection of the intelligent robot, and can reduce dead zones and improve obstacle avoidance performance of the intelligent robot.

Another objective of the present disclosure is to provide an intelligent robot.

Yet another objective of the present disclosure is to provide an obstacle detection method for an intelligent robot.

In order to achieve the above objectives, according to an aspect of embodiments of the present disclosure, a sensor assembly for an intelligent robot is provided, and the sensor assembly includes a first type sensor and a second type sensor. The first type sensor includes M first transmitting units and N first receiving units, and the M first transmitting units and the N first receiving units are separately disposed at preset angles, where M and N are positive integers. The second type sensor includes a light source and M+N-1 second receiving units, and the second receiving units are located between the first transmitting units and the first receiving units.

According to the sensor assembly for the intelligent robot in embodiments of the presnt disclosure, by disposing the first type sensors and the second type sensors alternately with each other, i.e. by adding the second receiving units between the first transmitting units and the first receiving units of the first type sensors, dead zones can be reduced when the intelligent robot detects obstacles, such that the obstacle avoidance performance of the intelligent robot is improved and collisions are reduced.

The first type sensor may be an ultrasonic sensor.

Specifically, the M first transmitting units and the N first receiving units inlcude: a first ultrasonic receiving unit, located in a front surface of the intelligent robot; a first ultrasonic transmitting unit and a second ultrasonic transmitting unit, respectively located on either side of the first ultrasonic receiving unit, and each of the first ultrasonic transmitting unit and the second ultrasonic transmitting unit forming a first angle with the first ultrasonic receiving unit; and a second ultrasonic receiving unit and a third ultrasonic receiving unit, respectively located on an outer side of the first ultrasonic transmitting unit and the second ultrasonic transmitting unit, the second ultrasonic receiving unit forming a second angle with the first ultrasonic transmitting unit, and the third ultrasonic receiving unit forming the second angle with the second ultrasonic transmitting unit.

The first angle is equal to the second angle.

Specifically, the second type sensor is an IR (Infrared Radiation) sensor, and the M+N-1 second receiving units include: a first infrared receiving unit, located between the first ultrasonic receiving unit and the first ultrasonic transmitting unit; a second infrared receiving unit, located between the first ultrasonic receiving unit and the second ultrasonic transmitting unit; a third infrared receiving unit, located between the first ultrasonic transmitting unit and the second ultrasonic receiving unit; and a fourth infrared receiving unit, located between the second ultrasonic transmitting unit and the third ultrasonic receiving unit.

Alternatively, the second type sensor is a PSD (Position Sensitive Detector) sensor, and the M+N-1 second receiving units include: a first light energy receiving unit, located between the first ultrasonic receiving unit and the first ultrasonic transmitting unit; a second light energy receiving unit, located between the first ultrasonic receiving unit and the second ultrasonic transmitting unit; a third light energy receiving unit, located between the first ultrasonic transmitting unit and the second ultrasonic receiving unit; and a fourth light energy receiving unit, located between the second ultrasonic transmitting unit and the third ultrasonic receiving unit.

Alternatively, the second type sensors include an IR sensor and a PSD sensor, and the M+N-1 second receiving units include: a fifth infrared receiving unit, located between the first ultrasonic receiving unit and the first ultrasonic transmitting unit; a sixth infrared receiving unit, located between the first ultrasonic receiving unit and the second ultrasonic transmitting unit; a fifth light energy receiving unit, located between the first ultrasonic transmitting unit and the second ultrasonic receiving unit; and a sixth light energy receiving unit, located between the second ultrasonic transmitting unit and the third ultrasonic receiving unit.

In order to achieve the above objectives, according to another aspect of embodiments of the present disclosure, an intelligent robot is provided, and the intelligent robot includes the sensor assembly provided in the above-described embodiments.

According to the intelligent robot provided in embodiments of the present disclosure, the obstacle detection may be performed by the sensor assembly of the above-described embodiments, such that the dead zones during the obstacle detectioncan be reduced, the obstacle avoidance performance of the intelligent robot can be improved and collisions can be reduced.

In order to achieve the above objectives, according to yet another aspect of embodiments of the present disclosure, an obstacle detection method for an intelligent robot is provided, in which, the intelligent robot includes a sensor assembly, the sensor assembly includes a first type sensor and a second type sensor, and the obstacle detection method includes: receiving a reflection singal from an object in a moving direction of the intelligent robot by the first type sensor and the second type sensor respectively; and determining whether the object obstructs moving of the intelligent robot according to the reflection signal.

According to the obstacle detection method for an intelligent robot provided in embodiments of the present disclosure, objects in the moving direction of the intelligent robot are detected by the first type sensor and the second type sensor, the dead zones may be reduced, such that the obstacle avoidance performance of the intelligent robot is improved and collisions are reduced.

The first type sensor is an ultrasonic sensor, and the second type sensor comprises an IR sensor and/or a PSD sensor.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The above-described and/or other aspects and advantages of embodiments of the present disclosure will become apparent and more readily appreciated from the following descriptions made with reference to the drawings, in which:
Fig. 1 is a schematic diagram of a sensor assembly for an intelligent robot according to an embodiment of the present disclosure;
Fig. 2 is a schematic diagram of a first type sensor in a sensor assembly for an intelligent robot according to another embodiment of the present disclosure;
Fig. 3 is a schematic diagram of a sensor assembly for an intelligent robot according to yet another embodiment of the present disclosure;
Fig. 4 is a schematic diagram of a sensor assembly for an intelligent robot according to still yet another embodiment of the present disclosure;
Fig. 5 is a schematic diagram of a sensor assembly for an intelligent robot according to yet still another embodiment of the present disclosure;
Fig. 6 is a block diagram of an intelligent robot according to an embodiment of the present disclosure; and
Fig. 7 is a flow chart of an obstacle detection method for an intelligent robot according to an embodiment of the present disclosure.

### Element list:

sensor assembly 100
first type sensor 10
second type sensor 20
first transmitting unit 101
first receiving unit 102
second receiving unit 201
first ultrasonic receiving unit 1021
first ultrasonic transmitting unit 1011
second ultrasonic transmitting unit 1012
second ultrasonic receiving unit 1022
third ultrasonic receiving unit 1023
first infrared receiving unit 2011
second infrared receiving unit 2012
third infrared receiving unit 2013
fourth infrared receiving unit 2014
first light energy receiving unit 2001
second light energy receiving unit 2002
third light energy receiving unit 2003
fourth light energy receiving unit 2004
fifth infrared receiving unit 2101
sixth infrared receiving unit 2102
fifth light energy receiving unit 2103
sixth light energy receiving unit 2104
intelligent robot 200

### DETAILED DESCRIPTION

Exemplary embodiments will be described in detail herein, and examples thereof are illustrated in accompanying drawings. Throughout figures referred by the following description, the same reference number in different figures indicates the same or similar elements unless otherwise stated. Implementations described in the following exemplary embodiments do not represent all the implementations consistent with the present disclosure. Instead, they are only examples of the device and method consistent with some aspects of the present disclosure detailed in the appended claims.

Various embodiments or examples are provided in the following description to implement different structures of the present disclosure. In order to simplify the present disclosure, certain elements and settings will be described. However, these elements and settings are only by way of example and are not intended to limit the present disclosure. In addition, reference numerals and/or letters may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied. Moreover, a structure in which a first feature is "on" a second feature may include an embodiment in which the first feature directly contacts the second feature, and may also include an embodiment in which an additional feature is formed between the first feature and the second feature so that the first feature does not directly contact the second feature.

In the description of the present invention, it should be noted that, unless specified and limited otherwise, the terms "mounted," "connected," "coupled," and the like should be used broadly, and for example, may be mechanical or electrical connections; may also be inner communications of two elements; may also be direct connections or indirect connections via intervening structures, which can be understood by those skilled in the art according to specific situations.

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby. Instead, the embodiments of the present disclosure comprise all the variants, modifications and their equivalents within the scope of the present disclosure as defined by the claims.

A sensor assembly for an intelligent robot, an intelligent robot including the sensor assembly and an obstacle detection method for an intelligent robot are described according to embodiments of the present disclosure referring to drawings as follows.

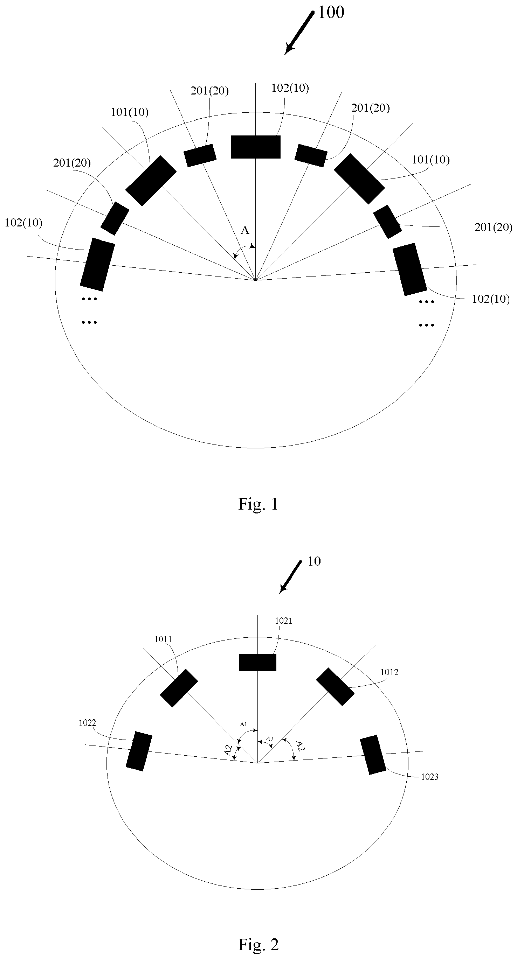

First, a sensor assembly for an intelligent robot is described. Fig. 1 is a schematic diagram of a sensor assembly for an intelligent robot according to an embodiment of the present disclosure.

As shown in Fig. 1, the sensor assembly 100 for an intelligent robot includes a first type sensor 10 and a second type sensor 20.

The first type sensor 10 includes M first transmitting units 101 and N first receiving units 102, and the M first transmitting units 101 and the N first receiving units 102 are separately disposed at preset angles A, where M and N are positive integers. In other words, as shown in Fig. 1, the M first transmitting units 101 and N first receiving units 102 are disposed alternately with each other, in which, the preset angles between each of the first transmitting units 101 and each of the first receiving units 102 may be same or different from each other.

The second type sensor 20 includes a light source (not shown) and M+N-1 second receiving units 201, the light source may be located inside the second type sensor 20, or may be set on a house of the intelligent robot, and configured to emit light towards an object to be detected around the intelligent robot, such that the second receiving units 201 receive light reflected by the object to be detected. The second receiving units 201 are located between the first transmitting units 101 and the first receiving units 102.

By disposing the first type sensors 10 and the second type sensors 20 alternately with each other, the intelligent robot may increase an area range of the obstacle detection, such that the dead zones are reduced, and the obstacle avoidance performance of the intelligent robot is improved.

Specifically, in an embodiment of the present disclosure, the first type sensor may be an ultrasonic sensor, which has less effect on colors compared to IR sensor.

Further, as shown in Fig. 2, the ultrasonic sensor includes a first ultrasonic receiving unit 1021, a first ultrasonic transmitting unit 1011, a second ultrasonic transmitting unit 1012, a second ultrasonic receiving unit 1022 and a third ultrasonic receiving unit 1023.

The first ultrasonic receiving unit 1021 is located in a front surface of the intelligent robot, and may receive ultrasonic signals reflected by objects in front of the intelligent robot. The first ultrasonic transmitting unit 1011 and the second ultrasonic transmitting unit 1012 are respectively located on either side of the first ultrasonic receiving unit 1021, and each of the first ultrasonic transmitting unit 1021 and the second ultrasonic transmitting unit 1022 forms a first angle A1 with the first ultrasonic receiving unit 1011. The second ultrasonic receiving unit 1022 and the third ultrasonic receiving unit 1023 are respectively located on the outer side of the first ultrasonic transmitting unit 1011 and the second ultrasonic transmitting unit 1012, and the second ultrasonic receiving unit 1022 forms a second angle A2 with the first ultrasonic transmitting unit 1011, and the third ultrasonic receiving unit 1023 forms the second angle A2 with the second ultrasonic transmitting unit 1012, in which, the first angle A1 may be equal to the second angle A2.

The ultrasonic sensor may realize object detection in different directions by setting the two transmitting units and the three receiving units at suitable angles. For example, a location of an object may be determined according to signal strength of ultrasonic signals received by the three receiving units, and thus the intelligent robot may be controlled to move according to the location of the object. For example, when an ultrasonic signal received by the third ultrasonic receiving unit 1023 is stronger than an ultrasonic signal received by the second ultrasonic receiving unit 1022 and stronger than an ultrasonic signal received by the first ultrasonic receiving unit 1021, and each of the the ultrasonic signals received by the three receiving units is stronger than a preset ultrasonic signal, then it may be determined that the object is in the direction of the third ultrasonic receiving unit 1023, and the intelligent robot may be controlled to avoid the direction of the object, thus avoiding collisions.

When the ultrasonic sensor is used to detect obstacles, there will be dead zones between the first transmitting units 101 and the first receiving units 102. For example, when the intelligent robot uses the ultrasonic sensor to detect obstacles, the intelligent robot cannot detect the obstacle if the obstacle is quadrangular and the intelligent robot happens to face an angle of the obstacle. In embodiments of the present disclosure, the second type sensor 20, e.g. an IR sensor and/or a PSD sensor, may be set between the first transmitting units 101 and the first receiving units 102 of the ultrasonic sensor, so as to detect the dead zones.

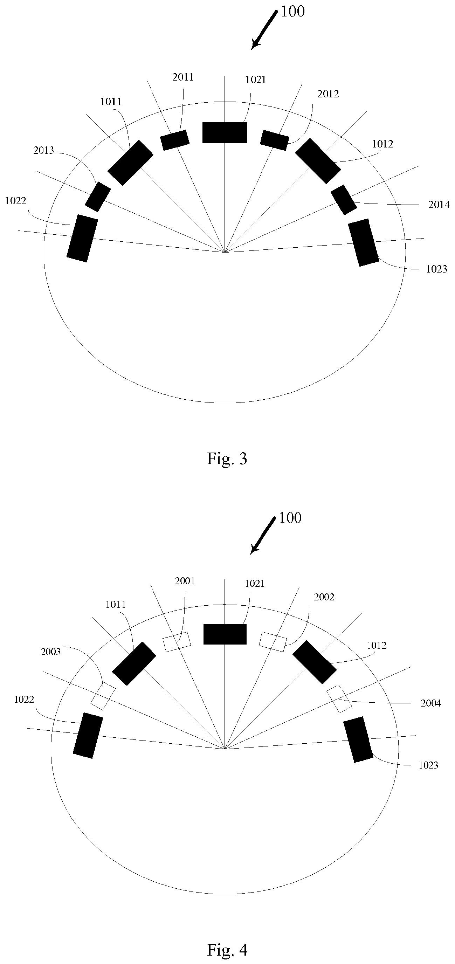

For example, the second type sensor 20 may be an IR sensor. Further, as shown in Fig. 3, the M+N-1 second receiving units 201 may include a first infrared receiving unit 2011, a second infrared receiving unit 2012, a third infrared receiving unit 2013 and a fourth infrared receiving unit 2014.

The first infrared receiving unit 2011 is located between the first ultrasonic receiving unit 1021 and the first ultrasonic transmitting unit 1011. The second infrared receiving unit 2012 is located between the first ultrasonic receiving unit 1021 and the second ultrasonic transmitting unit 1012. The third infrared receiving unit 2013 is located between the first ultrasonic transmitting unit 1011 and the second ultrasonic receiving unit 1022. The fourth infrared receiving unit 2014 is located between the second ultrasonic transmitting unit 1012 and the third ultrasonic receiving unit 1023.

When the ultrasonic sensor is performing detection, the IR sensor also performs detection. The light emitted by the light source of the IR sensor is transmitted to objects around the intelligent robot and light reflected by the objects is received by the above-described infrared receiving units set between the receiving units and the transmitting units of the ultrasonic seonsor. Even though there is a quadrangular obstacle, the light reflected by the angle portion of the quadrangular obstacle may be received by the infrared receiving units of the IR sensor, such that the location of the obstacle is determined.

In addition, the second type sensor 20 may be a PSD sensor. Further, as shown in Fig. 4, the M+N-1 second receiving units 201 include a first light energyreceiving unit 2001, a second light energy receiving unit 2002, a third light energy receiving unit 2003 and a fourth light energy receiving unit 2004.

The first light energy receiving unit 2001 is located between the first ultrasonic receiving unit 1021 and the first ultrasonic transmitting unit 1011. The second light energy receiving unit 2002 is located between the first ultrasonic receiving unit 1021 and the second ultrasonic transmitting unit 1012. The third light energy receiving unit 2003 is located between the first ultrasonic transmitting unit 1011 and the second ultrasonic receiving unit 1022. The fourth light energy receiving unit 2004 is located between the second ultrasonic transmitting unit 1012 and the third ultrasonic receiving unit 1023.

When the ultrasonic sensor is performing detection, the PSD sensor also performs the detection. The light emitted by the light source of the PSD sensor is transmitted to objects around the intelligent robot and light reflected by the objects is received by the above-described infrared receiving units set between the receiving units and the transmitting units of the ultrasonic seonsor. Even though there is a quadrangular obstacle, the light reflected by the angle portion of the quadrangular obstacle may be received by the infrared receiving units of the PSD sensor, such that the location of the obstacle is determined.

It is observed that, by disposing the first type sensors 10 like the ultrasonic sensor and the second type sensors 20 like the IR sensor or the PSD sensor alternately with each other, the dead zones may be reduced when the intelligent robot detects obstacles, and the obstacle avoidance performance of the intelligent robot may be improved.

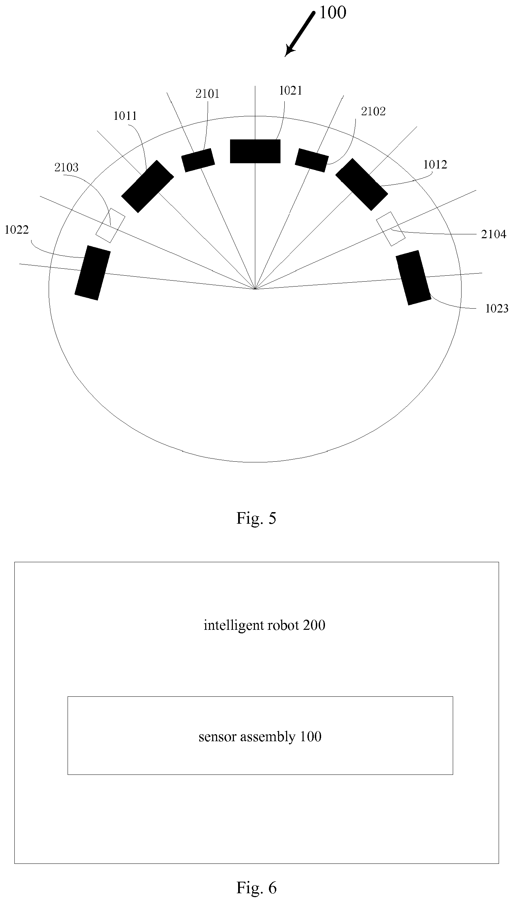

As another embodiment, the second type sensor 20 may include the IR sensor and the PSD sensor. Further, as shown in Fig. 5, the M+N-1 second receiving units 201 include a fifth infrared receiving unit 2101, a sixth infrared receiving unit 2102, a fifth light energy receiving unit 2103 and a sixth light energy receiving unit 2104.

The fifth infrared receiving unit 2101 is located between the first ultrasonic receiving unit 1021 and the first ultrasonic transmitting unit 1011. The sixth infrared receiving unit 2102 is located between the first ultrasonic receiving unit 1021 and the second ultrasonic transmitting unit 1012. The fifth light energy receiving unit 2103 is located between the first ultrasonic transmitting unit 1011 and the second ultrasonic receiving unit 1022. The sixth light energy receiving unit 2104 is located between the second ultrasonic transmitting unit 1012 and the third ultrasonic receiving unit 1023. It could be understood that, the receiving units of the IR sensor and the receiving units of the PSD sensor may also be set between the first receiving units 102 and the first transmitting units 101 in other orders.

Further, by disposing the ultrasonic sensor, the IR sensor and the PSD sensor alternately with each other, both the IR sensor and the PSD sensor are used to realize detecting dead zones of the ultrasonic sensor when the ultrasonic sensor is detecting obstacles, such that the dead zones are reduced, and the detection performance is improved.

In conclusion, according to the sensor assembly for the intelligent robot in the present disclosure, by disposing the first type sensors and the second type sensors alternately with each other, for example, by adding the second receiving units between the first receiving units and the first transmitting units of the first type sensors, the dead zones can be reduced when the intelligent robot detects obstacles, such that the obstacle avoidance performance of the intelligent robot is improved and collisions are reduced.

Based on the above-described sensor assembly, an intelligent robot is provided according to embodiments of another aspect in the present disclosure.

Fig. 6 is a block diagram of an intelligent robot according to an embodiment of the present disclosure. As shown in Fig. 6, the intelligent robot 200 in the present disclosure includes the sensor assembly 100 in the above-described embodiments.

According to the intelligent robot in the present disclosure, the obstacle detection may be performed according to the sensor assembly in the above-described embodiments, the dead zones during the obstacle detection can be reduced, such that the obstacle avoidance performance of the intelligent robot is improved and collisions are reduced.

An obstacle detection method for an intelligent robot according to yet another embodiment of the present disclosure is described with reference to drawings. The intelligent robot includes a sensor assembly, and the sensor assembly includes a first type sensor and a second type sensor.

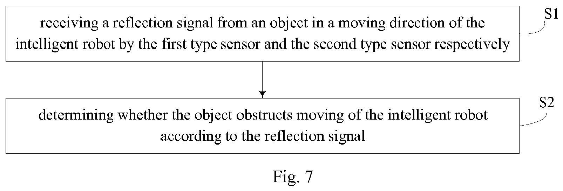

Fig. 7 is a flow chart of an obstacle detection method for an intelligent robot according to an embodiment of the present disclosure. As shown in Fig. 7, the obstacle detection method includes steps as follows.

In step S1, a reflection singal from an object in a moving direction of the intelligent robot is received by the first type sensor and the second type sensor respectively.

The first type sensor may be an ultrasonic sensor, and the second type sensor may comprise an IR sensor and/or a PSD sensor.

In step S2, it is determined whether the object obstructs moving of the intelligent robot according to the reflection signal.

For example, according to strength of the reflection signal from the object, a distance of the object is determined. Determining whether the object obstructs the moving of the intelligent robot requires determining a direction of the object, such that the intelligent robot may be controlled to avoid the direction of the obstacle object, thus avoiding collisions.

According to the obstacle detection method for the intelligent robot in the present disclosure, the objects in the moving direction of the intelligent robot are detected by the first type sensor and the second type sensor, the dead zones can be reduced, such that the obstacle avoidance performance of the intelligent robot is improved and collisions are reduced.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which may not follow a shown or discussed order according to the related functions in a substantially simultaneous manner or in a reverse order, to perform the function, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc. Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from principles and scope of the present disclosure

## Claims

1. A sensor assembly (100) for an intelligent robot, comprising:
a first type sensor (10), wherein the first type sensor (10) comprises M first transmitting units (101) and N first receiving units (102), and the M first transmitting units (101) and the N first receiving units (102) are alternatively and separately disposed at preset angles, where M and N are positive integers, wherein the preset angle comprises an angle between a line formed by the first transmitting unit (101) and a center of a bottom of the intelligent robot and a line formed by the first receiving unit (102) and the center of the bottom of the intelligent robot; and a second type sensor (20), wherein the second type sensor (20) comprises a light source and M+N-1 second receiving units (201), and the second receiving units (201) are located between the first transmitting units (101) and the first receiving units (102);
**characterized in that** the M first transmitting units (101) and the N first receiving units (102) comprise:
a first ultrasonic receiving unit (1021), located in a front surface of the intelligent robot;
a first ultrasonic transmitting unit (1011) and a second ultrasonic transmitting unit (1012), respectively located on either side of the first ultrasonic receiving unit (1021), and each of the first ultrasonic transmitting unit (1011) and the second ultrasonic transmitting unit (1012) forming a first angle with the first ultrasonic receiving unit (1021), wherein the first angle comprises an angle between a line formed by each of the first ultrasonic transmitting unit (1011) and the second ultrasonic transmitting unit (1012) and the center of the bottom of the intelligent robot and a line formed by the first ultrasonic receiving unit (1021) and the center of the bottom of the intelligent robot; and
a second ultrasonic receiving unit (1022) and a third ultrasonic receiving unit (1023), respectively located on an outer side of the first ultrasonic transmitting unit (1011) and the second ultrasonic transmitting unit (1012), and the second ultrasonic receiving unit (1022) forming a second angle with the first ultrasonic transmitting unit (1011) and the third ultrasonic receiving unit (1023) forming the second angle with the second ultrasonic transmitting unit (1012), wherein the second angle comprises an angle between a line formed by the second ultrasonic receiving unit (1022) and the center of the bottom of the intelligent robot and a line formed by the first ultrasonic transmitting unit (1011) and the center of the bottom of the intelligent robot, and an angle between a line formed by the third ultrasonic receiving unit (1023) and the center of the bottom of the intelligent robot and a line formed by the second ultrasonic transmitting unit (1012) and the center of the bottom of the intelligent robot;
the second type sensor (20) is an IR sensor, and the M+N-1 second receiving units (201) comprise:
a first infrared receiving unit (2011), located between the first ultrasonic receiving unit (1021) and the first ultrasonic transmitting unit (1011);
a second infrared receiving unit (2012), located between the first ultrasonic receiving unit (1021) and the second ultrasonic transmitting unit (1012);
a third infrared receiving unit (2013), located between the first ultrasonic transmitting unit (1011) and the second ultrasonic receiving unit (1022); and
a fourth infrared receiving unit (2014), located between the second ultrasonic transmitting unit (1012) and the third ultrasonic receiving unit (1023).

2. The sensor assembly (100) according to claim 1, wherein, the first type sensor (10) is an ultrasonic sensor.

3. The sensor assembly (100) according to claim 1, wherein, the first angle is equal to the second angle.

4. The sensor assembly (100) according to claim 1, wherein, the second type sensor (20) is a PSD sensor, and the M+N-1 second receiving units (201) comprise:
a first light energy receiving unit (2001), located between the first ultrasonic receiving unit (1021) and the first ultrasonic transmitting unit (1011);
a second light energy receiving unit (2002), located between the first ultrasonic receiving unit (1021) and the second ultrasonic transmitting unit (1012);
a third light energy receiving unit (2003), located between the first ultrasonic transmitting unit (1011) and the second ultrasonic receiving unit (1022); and
a fourth light energy receiving unit (2004), located between the second ultrasonic transmitting unit (1012) and the third ultrasonic receiving unit (1023).

5. The sensor assembly (100) according to claim 1, wherein, the second type sensor (20) comprises an IR sensor and a PSD sensor, and the M+N-1 second receiving units (201) comprise:
a fifth infrared receiving unit (2101), located between the first ultrasonic receiving unit (1021) and the first ultrasonic transmitting unit (1011);
a sixth infrared receiving unit (2102), located between the first ultrasonic receiving unit (1021) and the second ultrasonic transmitting unit (1012);
a fifth light energy receiving unit (2103), located between the first ultrasonic transmitting unit (1011) and the second ultrasonic receiving unit (1022); and
a sixth light energy receiving unit (2104), located between the second ultrasonic transmitting unit (1012) and the third ultrasonic receiving unit (1023).

6. An intelligent robot (200), comprising the sensor assembly (100) according to any one of claims 1-5.

7. An obstacle detection method for an intelligent robot (200), wherein, the intelligent robot (200) comprises a sensor assembly (100), the sensor assembly (100) comprises a first type sensor (10) and a second type sensor (20), the first type sensor (10) comprises M first transmitting units (101) and N first receiving units (102), the M first transmitting units (101) and the N first receiving units (102) are alternatively and separately disposed at preset angles, where M and N are positive integers, wherein the preset angle comprises an angle between a line formed by the first transmitting unit (101) and a center of a bottom of the intelligent robot and a line formed by the first receiving unit (102) and the center of the bottom of the intelligent robot; the second type sensor (20) comprises a light source and M+N-1 second receiving units (201), and the second receiving units (201) are located between the first transmitting units (101) and the first receiving units (102); **characterized in that**
the M first transmitting units (101) and the N first receiving units (102) comprise: a first ultrasonic receiving unit (1021), located in a front surface of the intelligent robot; a first ultrasonic transmitting unit (1011) and a second ultrasonic transmitting unit (1012), respectively located on either side of the first ultrasonic receiving unit (1021), and each of the first ultrasonic transmitting unit (1011) and the second ultrasonic transmitting unit (1012) forming a first angle with the first ultrasonic receiving unit (1021), wherein the first angle comprises an angle between a line formed by each of the first ultrasonic transmitting unit (1011) and the second ultrasonic transmitting unit (1012) and the center of the bottom of the intelligent robot and a line formed by the first ultrasonic receiving unit (1021) and the center of the bottom of the intelligent robot; and a second ultrasonic receiving unit (1022) and a third ultrasonic receiving unit (1023), respectively located on an outer side of the first ultrasonic transmitting unit (1011) and the second ultrasonic transmitting unit (1012), and the second ultrasonic receiving unit (1022) forming a second angle with the first ultrasonic transmitting unit (1011) and the third ultrasonic receiving unit (1023) forming the second angle with the second ultrasonic transmitting unit (1012), wherein the second angle comprises an angle between a line formed by the second ultrasonic receiving unit (1022) and the center of the bottom of the intelligent robot and a line formed by the first ultrasonic transmitting unit (1011) and the center of the bottom of the intelligent robot, and an angle between a line formed by the third ultrasonic receiving unit (1023) and the center of the bottom of the intelligent robot and a line formed by the second ultrasonic transmitting unit (1012) and the center of the bottom of the intelligent robot; the second type sensor (20) is an IR sensor, and the M+N-1 second receiving units (201) comprise: a first infrared receiving unit (2011), located between the first ultrasonic receiving unit (1021) and the first ultrasonic transmitting unit (1011); a second infrared receiving unit (2012), located between the first ultrasonic receiving unit (1021) and the second ultrasonic transmitting unit (1012); a third infrared receiving unit (2013), located between the first ultrasonic transmitting unit (1011) and the second ultrasonic receiving unit (1022); and a fourth infrared receiving unit (2014), located between the second ultrasonic transmitting unit (1012) and the third ultrasonic receiving unit (1023), and the obstacle detection method comprises:
receiving a reflection signal from an object in a moving direction of the intelligent robot by the first type sensor and the second type sensor respectively (S1); and
determining whether the object obstructs moving of the intelligent robot according to the reflection signal (S2).

8. The obstacle detection method according to claim 7, wherein, the first type sensor (10) is an ultrasonic sensor, and the second type sensor (20) comprises an IR sensor and/or a PSD sensor.

## Patentansprüche

1. Sensoranordnung (100) für einen intelligenten Roboter, umfassend:
einen Sensor eines ersten Typs (10), wobei der Sensor des ersten Typs (10) M erste Sendeeinheiten (101) und N erste Empfangseinheiten (102) umfasst und die M ersten Sendeeinheiten (101) und die N ersten Empfangseinheiten (102) abwechselnd und getrennt in voreingestellten Winkeln angeordnet sind, wobei M und N positive ganze Zahlen sind, wobei der voreingestellte Winkel einen Winkel zwischen einer Linie, die von der ersten Sendeeinheit (101) und einer Mitte eines Bodens des intelligenten Roboters gebildet wird, und
einer Linie, die von der ersten Empfangseinheit (102) und der Mitte des Bodens des intelligenten Roboters gebildet wird, umfasst; und einen Sensor eines zweiten Typs (20), wobei der Sensor des zweiten Typs (20) eine Lichtquelle und M+N-1 zweite Empfangseinheiten (201) umfasst, und
die zweiten Empfangseinheiten (201) zwischen den ersten Sendeeinheiten (101) und den ersten Empfangseinheiten (102) angeordnet sind;
**dadurch gekennzeichnet, dass**
die M ersten Sendeeinheiten (101) und die N ersten Empfangseinheiten (102) Folgendes umfassen:
eine erste Ultraschall-Empfangseinheit (1021), die sich in einer vorderen Oberfläche des intelligenten Roboters befindet;
eine erste Ultraschall-Sendeeinheit (1011) und eine zweite Ultraschall-Sendeeinheit (1012), die sich jeweils auf beiden Seiten der ersten Ultraschall-Empfangseinheit (1021) befinden, und wobei jede der ersten Ultraschall-Sendeeinheit (1011) und der zweiten Ultraschall-Sendeeinheit (1012) einen ersten Winkel mit der ersten Ultraschall-Empfangseinheit (1021) bilden, wobei der erste Winkel einen Winkel zwischen einer Linie, die von jeder der ersten Ultraschall-Sendeeinheit (1011) und der zweiten Ultraschall-Sendeeinheit (1012) und der Mitte des Bodens des intelligenten Roboters gebildet wird, und einer Linie, die von der ersten Ultraschall-Empfangseinheit (1021) und der Mitte des Bodens des intelligenten Roboters gebildet wird, umfasst; und
eine zweite Ultraschall-Empfangseinheit (1022) und eine dritte Ultraschall-Empfangseinheit (1023), die jeweils an einer Außenseite der ersten Ultraschall-Sendeeinheit (1011) und der zweiten Ultraschall-Sendeeinheit (1012) angeordnet sind, und wobei die zweite Ultraschall-Empfangseinheit (1022) einen zweiten Winkel mit der ersten Ultraschall-Sendeeinheit (1011) bildet und die dritte Ultraschall-Empfangseinheit (1023) den zweiten Winkel mit der zweiten Ultraschall-Sendeeinheit (1012) bildet, wobei der zweite Winkel einen Winkel zwischen einer Linie, die von der zweiten Ultraschall-Empfangseinheit (1022) und der Mitte des Bodens des intelligenten Roboters gebildet wird, und einer Linie, die von der ersten Ultraschall-Sendeeinheit (1011) und der Mitte des Bodens des intelligenten Roboters gebildet wird, und einen Winkel zwischen einer Linie, die von der dritten Ultraschallempfangseinheit (1023) und der Mitte des Bodens des intelligenten Roboters gebildet wird, und einer Linie, die von der zweiten Ultraschall-Sendeeinheit (1012) und der Mitte des Bodens des intelligenten Roboters gebildet wird, umfasst;
der Sensor des zweiten Typs (20) ein IR-Sensor ist und die M+N-1 zweiten Empfangseinheiten (201) Folgendes umfassen:
eine erste Infrarot-Empfangseinheit (2011), die sich zwischen der ersten Ultraschall-Empfangseinheit (1021) und der ersten Ultraschall-Sendeeinheit (1011) befindet;
eine zweite Infrarot-Empfangseinheit (2012), die sich zwischen der ersten Ultraschall-Empfangseinheit (1021) und der zweiten Ultraschall-Sendeeinheit (1012) befindet;
eine dritte Infrarot-Empfangseinheit (2013), die sich zwischen der ersten Ultraschall-Sendeeinheit (1011) und der zweiten Ultraschall-Empfangseinheit (1022) befindet; und
eine vierte Infrarot-Empfangseinheit (2014), die sich zwischen der zweiten Ultraschall-Sendeeinheit (1012) und der dritten Ultraschall-Empfangseinheit (1023) befindet.

2. Sensoranordnung (100) gemäß Anspruch 1, wobei der Sensor des ersten Typs (10) ein Ultraschallsensor ist.

3. Sensoranordnung (100) gemäß Anspruch 1, wobei der erste Winkel gleich dem zweiten Winkel ist.

4. Sensoranordnung (100) gemäß Anspruch 1, wobei der Sensor des zweiten Typs (20) ein PSD-Sensor ist und die M+N-1 zweiten Empfangseinheiten (201) Folgendes umfassen:
eine erste Lichtenergie-Empfangseinheit (2001), die sich zwischen der ersten Ultraschall-Empfangseinheit (1021) und der ersten Ultraschall-Sendeeinheit (1011) befindet;
eine zweite Lichtenergie-Empfangseinheit (2002), die sich zwischen der ersten Ultraschall-Empfangseinheit (1021) und der zweiten Ultraschall-Sendeeinheit (1012) befindet;
eine dritte Lichtenergie-Empfangseinheit (2003), die sich zwischen der ersten Ultraschall-Sendeeinheit (1011) und der zweiten Ultraschall-Empfangseinheit (1022) befindet; und
eine vierte Lichtenergie-Empfangseinheit (2004), die sich zwischen der zweiten Ultraschall-Sendeeinheit (1012) und der dritten Ultraschall-Empfangseinheit (1023) befindet.

5. Sensoranordnung (100) gemäß Anspruch 1, wobei der Sensor des zweiten Typs (20) einen IR-Sensor und einen PSD-Sensor umfasst und die M+N-1 zweiten Empfangseinheiten (201) Folgendes umfassen:
eine fünfte Infrarot-Empfangseinheit (2101), die sich zwischen der ersten Ultraschall-Empfangseinheit (1021) und der ersten Ultraschall-Sendeeinheit (1011) befindet;
eine sechste Infrarot-Empfangseinheit (2102), die sich zwischen der ersten Ultraschall-Empfangseinheit (1021) und der zweiten Ultraschall-Sendeeinheit (1012) befindet;
eine fünfte Lichtenergie-Empfangseinheit (2103), die sich zwischen der ersten Ultraschall-Sendeeinheit (1011) und der zweiten Ultraschall-Empfangseinheit (1022) befindet; und
eine sechste Lichtenergie-Empfangseinheit (2104), die sich zwischen der zweiten Ultraschall-Sendeeinheit (1012) und der dritten Ultraschall-Empfangseinheit (1023) befindet.

6. Intelligenter Roboter (200), umfassend die Sensoranordnung (100) gemäß einem der Ansprüche 1-5.

7. Hinderniserkennungsverfahren für einen intelligenten Roboter (200), wobei der intelligente Roboter (200) eine Sensoranordnung (100) umfasst, die Sensoranordnung (100) einen Sensor des ersten Typs (10) und einen Sensor des zweiten Typs (20) umfasst, der Sensor des ersten Typs (10) M erste Sendeeinheiten (101) und N erste Empfangseinheiten (102) umfasst, die M ersten Sendeeinheiten (101) und die N ersten Empfangseinheiten (102) abwechselnd und getrennt in voreingestellten Winkeln angeordnet sind, wobei M und N positive ganze Zahlen sind, wobei der voreingestellte Winkel einen Winkel zwischen einer Linie umfasst, die von der ersten Sendeeinheit (101) und einer Mitte eines Bodens des intelligenten Roboters gebildet wird, und einer Linie, die von der ersten Empfangseinheit (102) und der Mitte des Bodens des intelligenten Roboters gebildet wird; der Sensor des zweiten Typs (20) eine Lichtquelle und M+N-1 zweite Empfangseinheiten (201) umfasst, und die zweiten Empfangseinheiten (201) zwischen den ersten Sendeeinheiten (101) und den ersten Empfangseinheiten (102) angeordnet sind; **dadurch gekennzeichnet, dass**
die M ersten Sendeeinheiten (101) und die N ersten Empfangseinheiten (102) Folgendes umfassen:
eine erste Ultraschallempfangseinheit (1021), die in einer vorderen Fläche des intelligenten Roboters angeordnet ist; eine erste Ultraschall-Sendeeinheit (1011) und eine zweite Ultraschall-Sendeeinheit (1012), die jeweils auf beiden Seiten der ersten Ultraschall-Empfangseinheit (1021) angeordnet sind, und
wobei jede der ersten Ultraschall-Sendeeinheit (1011) und der zweiten Ultraschall-Sendeeinheit (1012) einen ersten Winkel mit der ersten Ultraschall-Empfangseinheit (1021) bildet, wobei der erste Winkel einen Winkel zwischen einer Linie, die von jeder der ersten Ultraschall-Sendeeinheit (1011) und der zweiten Ultraschall-Sendeeinheit (1012) und der Mitte des Bodens des intelligenten Roboters gebildet wird, und einer Linie, die von der ersten Ultraschall-Empfangseinheit (1021) und der Mitte des Bodens des intelligenten Roboters gebildet wird, umfasst; und eine zweite Ultraschallempfangseinheit (1022) und eine dritte Ultraschallempfangseinheit (1023), die jeweils an einer Außenseite der ersten Ultraschall-Sendeeinheit (1011) und der zweiten Ultraschall-Sendeeinheit (1012) angeordnet sind, und wobei die zweite Ultraschall-Empfangseinheit (1022) einen zweiten Winkel mit der ersten Ultraschall-Sendeeinheit (1011) bildet, und die dritte Ultraschall-Empfangseinheit (1023) den zweiten Winkel mit der zweiten Ultraschall-Sendeeinheit (1012) bildet, wobei der zweite Winkel einen Winkel zwischen einer Linie, die von der zweiten Ultraschall-Empfangseinheit (1022) und der Mitte des Bodens des intelligenten Roboters gebildet wird, und einer Linie, die von der ersten Ultraschall-Sendeeinheit (1011) und der Mitte des Bodens des intelligenten Roboters gebildet wird, und einen Winkel zwischen einer Linie,
die von der dritten Ultraschall-Empfangseinheit (1023) und der Mitte des Bodens des intelligenten Roboters gebildet wird, und einer Linie, die von der zweiten Ultraschall-Sendeeinheit (1012) gebildet wird und der Mitte des Bodens des intelligenten Roboters, umfasst; der zweite Sensortyp (20) ein IR-Sensor ist, und die M+N-1 zweiten Empfangseinheiten (201) Folgendes umfassen: eine erste Infrarot-Empfangseinheit (2011), die zwischen der ersten Ultraschall-Empfangseinheit (1021) und der ersten Ultraschall-Sendeeinheit (1011) angeordnet ist; eine zweite Infrarot-Empfangseinheit (2012), die zwischen der ersten Ultraschall-Empfangseinheit (1021) und der zweiten Ultraschall-Sendeeinheit (1012) angeordnet ist; eine dritte Infrarot-Empfangseinheit (2013), die zwischen der ersten Ultraschall-Sendeeinheit (1011) und der zweiten Ultraschall-Empfangseinheit (1022) angeordnet ist; und eine vierte Infrarot-Empfangseinheit (2014), die zwischen der zweiten Ultraschall-Sendeeinheit (1012) und der dritten Ultraschall-Empfangseinheit (1023) angeordnet ist, und wobei das Hinderniserkennungsverfahren Folgendes umfasst:
Empfangen eines Reflexionssignals von einem Objekt in einer Bewegungsrichtung des intelligenten Roboters durch den Sensor des ersten Typs bzw. den Sensor des zweiten Typs (S1); und
Bestimmen, ob das Objekt die Bewegung des intelligenten Roboters behindert anhand des Reflexionssignals (S2).

8. Hinderniserkennungsverfahren gemäß Anspruch 7, wobei der Sensor des ersten Typs (10) ein Ultraschallsensor ist und der Sensor des zweiten Typs (20) einen IR-Sensor und/oder einen PSD-Sensor umfasst.

## Revendications

1. Ensemble de capteur (100) pour un robot intelligent, comprenant :
un premier type de capteur (10), le premier type de capteur (10) comprenant M premières unités d'émission (101) et N premières unités de réception (102), et les M premières unités d'émission (101) et les N premières unités de réception (102) étant disposées en alternance et séparément à des angles prédéfinis, où M et N sont des nombres entiers positifs, l'angle prédéfini comprenant un angle entre une ligne formée par la première unité d'émission (101) et un centre d'une partie inférieure du robot intelligent et une ligne formée par la première unité de réception (102) et le centre de la partie inférieure du robot intelligent; et un deuxième type de capteur (20), le deuxième type de capteur (20) comprend une source de lumière et M+N-1 deuxièmes unités de réception (201), et les deuxièmes unités de réception (201) étant situées entre les premières unités d'émission (101) et les premières unités de réception (102) ;
**caractérisé en ce que**
les M premières unités d'émission (101) et les N premières unités de réception (102) comprennent :
une première unité de réception ultrasonique (1021) située dans une surface avant du robot intelligent ;
une première unité d'émission ultrasonique (1011) et une deuxième unité d'émission ultrasonique (1012) situées respectivement de part et d'autre de la première unité de réception ultrasonique (1021), et chacune parmi la première unité d'émission ultrasonique (1011) et la deuxième unité d'émission ultrasonique (1012) formant un premier angle avec la première unité de réception ultrasonique (1021), le premier angle comprenant un angle entre une ligne formée par chacune parmi la première unité d'émission ultrasonique (1011) et la deuxième unité d'émission ultrasonique (1012) et le centre de la partie inférieure du robot intelligent et une ligne formée par la première unité de réception ultrasonique (1021) et le centre de la partie inférieure du robot intelligent ; et
une deuxième unité de réception ultrasonique (1022) et une troisième unité de réception ultrasonique (1023), situées respectivement sur un côté extérieur de la première unité d'émission ultrasonique (1011) et de la deuxième unité d'émission ultrasonique (1012), et la deuxième unité de réception ultrasonique (1022) formant un deuxième angle avec la première unité d'émission ultrasonique (1011) et la troisième unité de réception ultrasonique (1023) formant le deuxième angle avec la deuxième unité d'émission ultrasonique (1012), le deuxième angle comprenant un angle entre une ligne formée par la deuxième unité de réception ultrasonique (1022) et le centre de la partie inférieure du robot intelligent et une ligne formée par la première unité d'émission ultrasonique (1011) et le centre de la partie inférieure du robot intelligent, et un angle entre une ligne formée par la troisième unité de réception ultrasonique (1023) et le centre de la partie inférieure du robot intelligent et une ligne formée par la deuxième unité d'émission ultrasonique (1012) et le centre de la partie inférieure du robot intelligent ;
le deuxième type de capteur (20) est un capteur infrarouge, et les M+N-1 deuxièmes unités de réception (201) comprennent :
une première unité de réception infrarouge (2011) située entre la première unité de réception ultrasonique (1021) et la première unité d'émission ultrasonique (1011) ;
une deuxième unité de réception infrarouge (2012) située entre la première unité de réception ultrasonique (1021) et la deuxième unité d'émission ultrasonique (1012) ;
une troisième unité de réception infrarouge (2013) située entre la première unité d'émission ultrasonique (1011) et la deuxième unité de réception ultrasonique (1022) ; et
une quatrième unité de réception infrarouge (2014) située entre la deuxième unité d'émission ultrasonique (1012) et la troisième unité de réception ultrasonique (1023).

2. Ensemble de capteur (100) selon la revendication 1, dans lequel le premier type de capteur (10) est un capteur ultrasonique.

3. Ensemble de capteur (100) selon la revendication 1, dans lequel le premier angle est égal au deuxième angle.

4. Ensemble de capteur (100) selon la revendication 1, dans lequel le deuxième type de capteur (20) est un capteur PSD, et les M+N-1 deuxièmes unités de réception (201) comprennent :
une première unité de réception d'énergie lumineuse (2001) située entre la première unité de réception ultrasonique (1021) et la première unité d'émission ultrasonique (1011) ;
une deuxième unité de réception d'énergie lumineuse (2002) située entre la première unité de réception ultrasonique (1021) et la deuxième unité d'émission ultrasonique (1012) ;
une troisième unité de réception d'énergie lumineuse (2003) située entre la première unité d'émission ultrasonique (1011) et la deuxième unité de réception ultrasonique (1022) ; et
une quatrième unité de réception d'énergie lumineuse (2004) située entre la deuxième unité d'émission ultrasonique (1012) et la troisième unité de réception ultrasonique (1023).

5. Ensemble de capteur (100) selon la revendication 1, dans lequel le deuxième type de capteur (20) comprend un capteur infrarouge et un capteur PSD, et les M+N-1 deuxièmes unités de réception (201) comprennent :
une cinquième unité de réception infrarouge (2101) située entre la première unité de réception ultrasonique (1021) et la première unité d'émission ultrasonique (1011) ;
une sixième unité de réception infrarouge (2102) située entre la première unité de réception ultrasonique (1021) et la deuxième unité d'émission ultrasonique (1012) ;
une cinquième unité de réception d'énergie lumineuse (2103) située entre la première unité d'émission ultrasonique (1011) et la deuxième unité de réception ultrasonique (1022) ; et
une sixième unité de réception d'énergie lumineuse (2104) située entre la deuxième unité d'émission ultrasonique (1012) et la troisième unité de réception ultrasonique (1023).

6. Robot intelligent (200) comprenant l'ensemble de capteur (100) selon l'une quelconque des revendications 1 à 5.

7. Procédé de détection d'obstacles pour un robot intelligent (200), dans lequel le robot intelligent (200) comprend un ensemble de capteur (100), l'ensemble de capteur (100) comprend un premier type de capteur (10) et un deuxième type de capteur (20), le premier type de capteur (10) comprend M premières unités d'émission (101) et N premières unités de réception (102), les M premières unités d'émission (101) et les N premières unités de réception (102) sont disposées en alternance et séparément à des angles prédéfinis, où M et N sont des nombres entiers positifs, l'angle prédéfini comprenant un angle entre une ligne formée par la première unité d'émission (101) et un centre d'une partie inférieure du robot intelligent et une ligne formée par la première unité de réception (102) et le centre de la partie inférieure du robot intelligent; le deuxième type de capteur (20) comprend une source de lumière et M+N-1 deuxièmes unités de réception (201), et les deuxièmes unités de réception (201) se situent entre les premières unités d'émission (101) et les première unité de réception (102) ;
**caractérisé en ce que**
les M premières unités d'émission (101) et les N premières unités de réception (102) comprennent : une première unité de réception ultrasonique (1021) située dans une surface avant du robot intelligent; une première unité d'émission ultrasonique (1011) et une deuxième unité d'émission ultrasonique (1012) situées respectivement de part et d'autre de la première unité de réception ultrasonique (1021), et chacune parmi la première unité d'émission ultrasonique (1011) et la deuxième unité d'émission ultrasonique (1012) formant un premier angle avec la première unité de réception ultrasonique (1021), le premier angle comprenant un angle entre une ligne formée par chacune parmi la première unité d'émission ultrasonique (1011) et la deuxième unité d'émission ultrasonique (1012) et le centre de la partie inférieure du robot intelligent et une ligne formée par la première unité de réception ultrasonique (1021) et le centre de la partie inférieure du robot intelligent; et une deuxième unité de réception ultrasonique (1022) et une troisième unité de réception ultrasonique (1023), situées respectivement sur un côté extérieur de la première unité d'émission ultrasonique (1011) et de la deuxième unité d'émission ultrasonique (1012), et la deuxième unité de réception ultrasonique (1022) formant un deuxième angle avec la première unité d'émission ultrasonique (1011) et la troisième unité de réception ultrasonique (1023) formant le deuxième angle avec la deuxième unité d'émission ultrasonique (1012), le deuxième angle comprenant un angle entre une ligne formée par la deuxième unité de réception ultrasonique (1022) et le centre de la partie inférieure du robot intelligent et une ligne formée par la première unité d'émission ultrasonique (1011) et le centre de la partie inférieure du robot intelligent, et un angle entre une ligne formée par la troisième unité de réception ultrasonique (1023) et le centre de la partie inférieure du robot intelligent et une ligne formée par la deuxième unité d'émission ultrasonique (1012) et le centre de la partie inférieure du robot intelligent ; le deuxième type de capteur (20) est un capteur infrarouge, et les M+N-1 deuxièmes unités de réception (201) comprennent : une première unité de réception infrarouge (2011) située entre la première unité de réception ultrasonique (1021) et la première unité d'émission ultrasonique (1011) ; une deuxième unité de réception infrarouge (2012) située entre la première unité de réception ultrasonique (1021) et la deuxième unité d'émission ultrasonique (1012) ; une troisième unité de réception infrarouge (2013) située entre la première unité d'émission ultrasonique (1011) et la deuxième unité de réception ultrasonique (1022) ; et une quatrième unité de réception infrarouge (2014) située entre la deuxième unité d'émission ultrasonique (1012) et la troisième unité de réception ultrasonique (1023), et le procédé de détection d'obstacles comprenant :
la réception d'un signal de réflexion venant d'un objet dans une direction de déplacement du robot intelligent, par le premier type de capteur et le deuxième type de capteur respectivement (S1) ; et
la détermination si l'objet empêche le déplacement du robot intelligent en fonction du signal de réflexion (S2).

8. Procédé de détection d'obstacles selon la revendication 7, dans lequel le premier type de capteur (10) est un capteur ultrasonique, et le deuxième type de capteur (20) comprend un capteur infrarouge et/ou un capteur PSD.
